(19) Europäisches Patentamt

European Patent Office

Office européen des brevets

(11) Veröffentlichungsnummer: **0 347 556**
**A1**

## (12) EUROPÄISCHE PATENTANMELDUNG

(21) Anmeldenummer: **89107418.9**

(22) Anmeldetag: **25.04.89**

(51) Int. Cl.⁴: **B28D 1/14**

(30) Priorität: **22.06.88 DE 3821056**

(43) Veröffentlichungstag der Anmeldung:
**27.12.89 Patentblatt 89/52**

(84) Benannte Vertragsstaaten:
**AT BE CH DE ES FR GB IT LI NL**

(71) Anmelder: **fischerwerke Artur Fischer GmbH
& Co. KG
Weinhalde 14 - 18
D-7244 Waldachtal 3/Tumlingen(DE)**

(72) Erfinder: **Fischer, Artur H. C., Prof.Dr.
Weinhalde 34
D-7244 Waldachtal 3/Tumlingen(DE)**

(54) **Bohrer zur Herstellung von Bohrlöchern mit Hinterschneidung.**

㊗ Bohrer (1) auf den eine Führungshülse (18) am Schaft zwischen Bohrplättchen (4) und einem Bund (7) aufgesetzt ist.

Fig.1

EP 0 347 556 A1

## Bohrer zur Herstellung von Bohrlöchern mit Hinterschneidung

Die Erfindung betrifft einen Bohrer zur Herstellung von Bohrlöchern mit Hinterschneidung gemäß der Gattung des Hauptanspruchs.

Es sind Bohrvorrichtungen bekannt, die aus einem in eine Bohrmaschine einsetzbaren Aufnahmeelement bestehen, welches ein Innengewinde besitzt, in das ein speziell zur Herstellung von Hinterschneidungen vorgesehener Bohrer einschraubbar ist. Die bekannten Bohrvorrichtungen sind mit Absaugeinrichtungen versehen, die die Bohreraufnahme mittels einer Bohrglocke umschließen. An der Bohrglocke kann ein hülsenförmiges Element abstehen, welches den eingeschraubten Bohrer am Schaft teilweise umschließt und das während des Bohrvorganges den Bohrer im Bohrloch zentriert.

Die herkömmlichen Bohrvorrichtungen zur Herstellung von Hinterschneidungen sind aufwendig und müssen konstruktionsbedingt eine separate Bohreraufnahme verwenden, in die der Bohrer einschraubbar ist.

Der Erfindung liegt die Aufgabe zugrunde, einen Bohrer zur Herstellung von Bohrlöchern mit Hinterschneidung zu schaffen, der unmittelbar in ein Bohrfutter einer Schlagbohrmaschine einspannbar ist und ein Zentrierelement besitzt.

Die Lösung dieser Aufgabe wird bei einem Bohrer der eingangs genannten Gattung durch die im kennzeichnenden Teil des Hauptanspruches angegebenen Merkmale erhalten. Der einstückige Bohrschaft besitzt zwei im Abstand angeordnete Verbreiterungen in Form des Bohrplättchens und eines Bundes, zwischen denen eine Führungshülse längsverschiebbar angeordnet ist. Der Außendurchmesser der Führungshülse entspricht der maximalen Breite des Bohrplättchens, so daß die Führungshülse weitgehend passgenau während des Bohrvorgangs in das Bohrloch eindringt, wobei der in ihr geführte Bohrschaft konzentrisch im Bohrloch gehalten wird.

Da Bohrer und Führungshülse, die auch als Zentrierhülse bezeichnet werden kann, aus gehärtetem Metall bestehen müssen, ist ein spezielles Herstellungsverfahren erforderlich, um die Führungshülse auf den einstückigen Bohrschaft zu bringen. Entweder kann die Führungshülse vor dem Härten geschlitzt und im aufgeweiteten Zustand seitlich in radialer Richtung auf den Bohrschaft aufgeschoben und anschließend zusammengedrückt und dann gehärtet werden, oder es wird zunächst die gehärtete Führungshülse auf den noch nicht mit einem Bohrplättchen bestückten Bohrschaft axial aufgeschoben, wobei dann das Bohrplättchen eingesetzt und mit dem Bohrschaft verlötet wird. Durch diese Maßnahmen erhält man einen im Aufbau sehr einfachen Bohrer der zur Herstellung von Bohrlöchern mit Hinterschneidung im Bereich des Bohrlochgrundes geeignet ist.

Um eine definierte Schwenkbewegung, die zur Herstellung der Hinterschneidung durch Ausreiben des Bohrloches erforderlich ist, kann die Innenbohrung der Zentrierhülse konisch verlaufen.

Die Führungshülse besitzt vorzugsweise einen dem Bund zugewandten Flansch mit einer nach innen gewölbten Anlagefläche, die ein Schwenklager für den ballig ausgebildeten Bund darstellt. Die Schwenkbewegung zum Ausreiben der Hinterschneidung wird dadurch erleichtert.

Eine sehr vorteilhafte Weiterbildung sieht vor, daß am Schaft vom Bohrplättchen ausgehend bis über den Bund Bohrmehlnuten verlaufen, die dazu dienen, das Bohrmehl aus dem Bohrloch nach außen zu transportieren.

Der erfindungsgemäße Bohrer läßt sich besonders einfach durch eines der in den Ansprüchen 7 und 8 gekennzeichneten Verfahren herstellen.

Die Erfindung ist nachfolgend anhand der Zeichnung näher erläutert.

Es zeigen:

Figur 1 einen in ein Bohrloch eingesetzten Bohrer mit Führungshülse und

Figur 2 eine zweite Ausführungsform eines Bohrers mit Führungshülse.

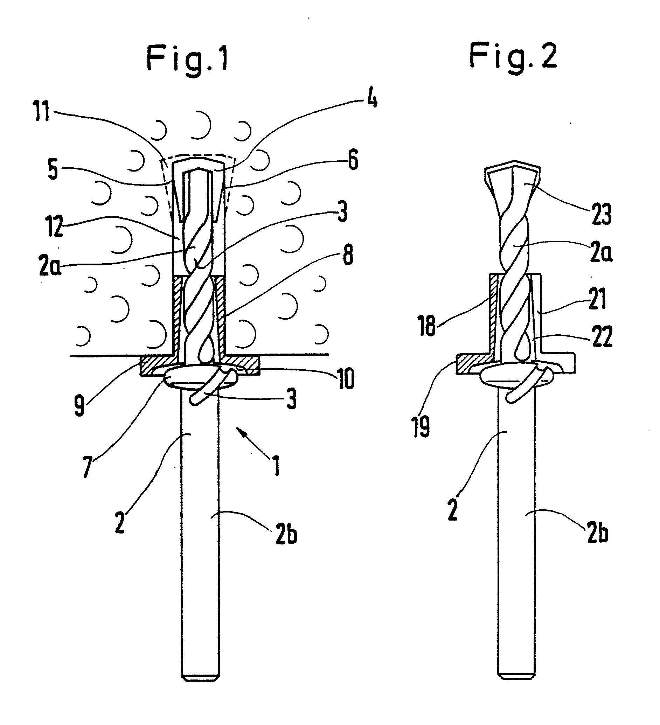

Der in Figur 1 dargestellte Bohrer 1 besteht aus einem Bohrschaft 2, der in einen vorderen mit Bohrmehlnuten 3 versehenen Abschnitt 2a und einen hinteren Abschnitt 2b unterteilt ist. Der Schaftabschnitt 2b läßt sich in ein Bohrfutter einer hier nicht dargestellten Schlagbohrmaschine oder dgl. einspannen.

Am Bohrschaftabschnitt 2a ist in einen Längsschlitz ein Bohrplättchen 4 eingelötet, dessen seitliche Schneiden 5, 6 am angrenzenden Schaftabschnitt 2a überstehen. Am Übergang vom Schaftabschnitt 2a zum Schaftabschnitt 2b ist eine balliger Bund 7 angeformt über den die Bohrmehlnut 3 bis zum Schaftabschnitt 2b geführt ist.

Zwischen Bohrplättchen 4 und Bund 7 umschließt eine längsverschiebbare Führungshülse 8 den Schaft 2. Der Außendurchmesser des hülsenförmigen Teils der Führungshülse 8 entspricht der Breite des Bohrplättchens 4. Der Innendurchmesser der Führungshülse 8 ist geringfügig größer als der Schaftdurchmesser am Abschnitt 2a. An der den Bund 7 zugewandten Seite besitzt die Führungshülse 8 einen Flansch 9 mit einer gewölbten Anlagefläche 10 für den Bund 7.

Unter der Anlage des Bundes 7 an der Anlagefläche 10 läßt sich der Bohrer 1 im Bohrloch bei gleichzeitiger Rotation verschwenken wodurch eine Hinterschneidung 11 ausgerieben wird, die mit unterbrochenen Linien am Bohrlochgrund dargestellt ist. In ein Bohrloch 12 mit Hinterschneidung 11 läßt sich ein ansich bekannter Spreizdübel einsetzen, der mit seinem Spreizteil formschlüssig in die Hinterschneidung 11 eingreift.

In Figur 2 ist ein Ausführungsbeispiel eines Bohrer dargestellt, dessen Führungshülse 18 einen über ihre gesamte Länge verlaufenden Längsschlitz 21 hat: Die Innenbohrung 22 verläuft konisch und hat ihren maximalen Durchmesser am Flansch 19. Der Schaft 2 des Bohrers besitzt im Bereich des Bohrplättchens 4 eine konische Erweiterung 23.

Die konisch verlaufende Innenbohrung 22 begrenzt die Schwenkbewegung des Bohrschaftes innerhalb der Führungshülse 18, wodurch die maximale Schwenkbewegung begrenzt wird, so daß reproduzierbare Hinterschneidungen herstellbar sind.

Bei dem in Figur 1 dargestellten Bohrer wird die gehärtete Führungshülse 18 vor Einsetzen des Bohrplättchens 4 auf den Schaft aufgeschoben, während bei dem Bohrer gemäß Figur 2 die noch nicht gehärtete Führungshülse 18 aufgeweitet und von der Seite auf den Bohrschaft aufgeschoben wird. Anschließend wird bei der Ausführung gemäß Figur 2 die Führungshülse 18 wieder zusammengedrückt und dann gehärtet. Bei beiden Ausführungsformen ist der gesamte Bohrschaft, der die Abschnitte 2a und 2b umfaßt zusammen mit dem angeformten Bund 7 ein einstückiges Teil.

## Ansprüche

1. Bohrer zur Herstellung von Bohrlöchern mit Hinterschneidung (11), bestehend aus einem Bohrschaft (2) und wenigstens einem Bohrplättchen (4) das den angrenzenden Bohrschaft seitlich überragt, **dadurch gekennzeichnet**, daß im Abstand vom Bohrplättchen (4) am Bohrschaft (2) ein balliger Punkt (7) angeformt ist und daß zwischen Bohrplättchen (4) und Bund (7) eine Führungshülse (8) längsverschiebbar gelagert ist, deren Innendurchmesser kleiner ist als der Durchmesser des Bundes (7) und kleiner als die maximale Breite des Bohrplättchens (4).

2. Bohrer nach Anspruch 1, **dadurch gekennzeichnet**, daß die Längsbohrung (22) der Führungshülse (18) konisch verläuft.

3. Bohrer nach einem der Ansprüche 1 oder 2, **dadurch gekennzeichnet**, daß an der dem Bund (7) zugewandten Seite die Führungshülse (8) einen Flansch (9, 19) hat.

4. Bohrer nach Anspruch 3, **dadurch gekennzeichnet**, daß der Flansch (9,19) eine gewölbte, dem Bund (7) zugewandte Anlagefläche (10) besitzt.

5. Bohrer nach einem der vorhergehenden Ansprüche, **dadurch gekennzeichnet**, daß am Schaft (2) vom Bohrplättchen (4) ausgehend bis über den Bund (7) Bohrmehlnuten (3) verlaufen.

6. Bohrer nach einem der vorhergehenden Ansprüche, **dadurch gekennzeichnet**, daß der Bohrschaft (2) und die Führungshülse (8,18) gehärtet sind.

7. Bohrer nach einem der vorhergehenden Ansprüche, **dadurch gekennzeichnet**, daß der Bohrschaft (2a) im Bereich der Seitenschneiden (5, 6) des Bohrplättchens (4) eine konische Erweiterung (23) hat, und daß die Führungshülse (18) einen durchgehenden Längsschlitz (21) hat.

8. Verfahren zur Herstellung eines Bohrers nach einem der vorhergehenden Ansprüche, **dadurch gekennzeichnet**, daß die metallische Führungshülse (18) in ungehärtetem Zustand geschlitzt, aufgeweitet und dann seitlich über den Bohrschaft (2a) geschoben wird, daß die Führungshülse (18) danach auf ihren ursprünglichen Durchmesser zusammengedrückt und dann auf dem Bohrschaft gehärtet wird.

9. Verfahren zur Herstellung eines Bohrers nach einem der Ansprüche 1 bis 6, **dadurch gekennzeichnet**, daß vor dem Anbringen des Bohrplättchens (4) die Führungshülse (8) auf den Bohrschaft (2a) aufgeschoben und dann das Bohrplättchen (4) am Bohrschaft in einen Schlitz eingesetzt und mit dem Schaft verlötet wird.

# Fig.1

# Fig.2

## EINSCHLÄGIGE DOKUMENTE

EP 89107418.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 3 335 074 (LIEBIG) <br> * Fig. * <br> -- | 1,2,3,4,5 | B 28 D 1/14 |
| Y | DE - A1 - 3 014 388 (FISCHER) <br> * Fig.; Seite 4, Zeile 27 * <br> -- | 1,2,3,4,5 | |
| A | EP - A1 - 0 094 070 (HAWERA PROBST) <br> * Fig. * <br> -- | 1,2,3 | |
| A | DE - A1 - 2 349 998 (FISCHER) <br> * Patentanspruch 5 * <br> ---- | 1 | |

RECHERCHIERTE SACHGEBIETE (Int. Cl.4)

B 23 B
B 28 D
E 21 B

Der vorliegende Recherchenbericht wurde für alle Patentansprüche erstellt.

| Recherchenort | Abschlußdatum der Recherche | Prüfer |
|---|---|---|
| WIEN | 11-08-1989 | GLAUNACH |